Europäisches Patentamt

European Patent Office

Office européen des brevets

(11) Numéro de publication: **0 405 538 A1**

## (12) DEMANDE DE BREVET EUROPEEN

(21) Numéro de dépôt: 90112334.9

(51) Int. Cl.5: **H01B 7/28**

(22) Date de dépôt: **28.06.90**

(30) Priorité: **29.06.89 FR 8908709**

(43) Date de publication de la demande:
**02.01.91 Bulletin 91/01**

(84) Etats contractants désignés:
**BE CH DE ES FR GB IT LI LU NL**

(71) Demandeur: **CABLERIES DE LENS**
**36 rue de Londres**
**F-62300 Lens(FR)**

(72) Inventeur: **Becker, Jean**
**263, rue d'Ardres, Autingues**
**F-62610 Ardres(FR)**
Inventeur: **Zanin, Yves**
**La Bergerie, Rue du Moulin, Bousignies Sur**
**Roc**
**F-59149 Cousolre(FR)**

(74) Mandataire: **Weinmiller, Jürgen et al**
**Lennéstrasse 9 Postfach 24**
**D-8133 Feldafing(DE)**

(54) **Câble électrique d'énergie à basse tension polyphasé étanche à l'eau.**

(57) Câble électrique étanche d'énergie à basse tension polyphasé. Il comporte dans les interstices entre les conducteurs (1, 2, 3, 4) des joncs (9, 10, 11, 12, 13, 14) constitués par des fibres gonflant en présence d'eau et des fils non gonflants en une matière plastique de résistance à la traction plus élevée.

FIG. 2

## CÂBLE ÉLECTRIQUE D'ÉNERGIE À BASSE TENSION POLYPHASÉ, ÉTANCHE À L'EAU

La présente invention concerne un câble électrique d'énergie à basse tension polyphasé étanche à l'eau, comportant dans les interstices entre les conducteurs des joncs en un matériau présentant une capacité de gonflement en présence d'eau. De tels câbles comportent en section droite des conducteurs de phase en forme de secteur circulaire et un neutre circulaire, parfois des conducteurs de phase et un neutre tous circulaires.

L'étanchéité est généralement obtenue dans des câbles d'énergie par l'introduction dans l'assemblage de bourrages en matériau visqueux et collant qui remplissent les interstices entre les conducteurs et entre ces conducteurs et l'armure, s'il y en a une. On associe souvent à ce matériau une poudre gonflant à l'eau pour compléter l'étanchéité.

Lors des interventions sur ces câbles pour réaliser des jonctions ou des dérivations, les monteurs ont beaucoup de difficultés pour réaliser un travail satisfaisant. Le nettoyage des conducteurs est pénible et long et rarement parfait, du fait de la nature collante et visqueuse des bourrages.

Il a déjà été proposé dans le document FR-A-2407557 un câble d'énergie à moyenne ou haute tension comportant de son axe à sa périphérie un conducteur axial, un premier écran semi-conducteur intérieur, un isolant, un second écran semi-conducteur, un feuillard métallique à ondulations longitudinales et une gaine externe, où des joncs de matière plastique dans lesquels sont fixés des fibres de cellulose sont disposés au contact des ondulations longitudinales de l'écran dans les creux entre celles-ci et le second écran semi-conducteur. Cette structure n'est pas applicable aux câbles polyphasés à basse tension, et par ailleurs elle n'évite pas la détérioration du câble dès que l'eau a pénétré quelque peu dans le second écran semi-conducteur.

La présente invention a pour but de procurer un câble électrique d'énergie à basse tension polyphasé présentant une excellente résistance à la pénétration et à la propagation longitudinale de l'eau éventuellement infiltrée, et qui permette d'effectuer sur le câble des jonctions ou des dérivations dans de bonnes conditions et avec rapidité.

Le câble selon l'invention est caractérisé en ce que ses joncs comprennent des fibres gonflant en présence d'eau et des fils non gonflants en présence d'eau en une matière plastique de résistance à la traction plus élevée.

Il répond en outre de préférence à au moins l'une des caractéristiques suivantes :
- Ses joncs sont constitués par des fibres, fils, ou rubans retordus sur eux-mêmes, en polypropylène, et des fils ou fibres de polyacrylate.
- Il présente autour des conducteurs une armure métallique, elle-même entourée d'une gaine, et il comporte une poudre en un matériau gonflant à l'eau, d'une part entre le contour externe des conducteurs et l'armure, d'autre part entre l'armure et la gaine.

Il est décrit ci-après, à titre d'exemple et en référence aux figures du dessin annexé, un conducteur selon l'invention.

La figure 1 représente un tronçon de conducteur avec arrachement partiel de ses couches externes.

La figure 2 représente ce conducteur en coupe par un plan perpendiculaire à son axe.

Le câble comporte les conducteurs de phase 1, 2, 3, munis des isolants 5, 6, 7 en polymère synthétique, et le neutre 4 à gaine de plomb 8.

Il est disposé dans les interstices entre les conducteurs, les joncs périphériques 9, 10, 11, 12 et les joncs internes 13, 14 une poudre d'étanchéité (représentée par des points). Ces joncs peuvent être, soit entièrement en fibres gonflant en présence d'eau, notamment en fibres de viscose ou de polyacrylate, soit en une association de fibres gonflantes et de fils non gonflants, par exemple en polypropylène, en polyamide ou en ruban de polypropylène déchiqueté et retordu sur lui-même, ceux-ci procurant une meilleure résistance à la traction et pouvant par exemple être enroulés hélicoïdalement autour des fibres gonflantes, soit enfin en fibres non gonflantes imprégnées d'une poudre gonflante. On peut obtenir ces dernières fibres en humectant légèrement les fibres par pulvérisation d'eau mélangée de glycérol, puis en faisant passer la ficelle ainsi formée dans une poudreuse électrostatique pour y déposer une poudre gonflante à l'eau, par exemple de la carboxyméthylcellulose .

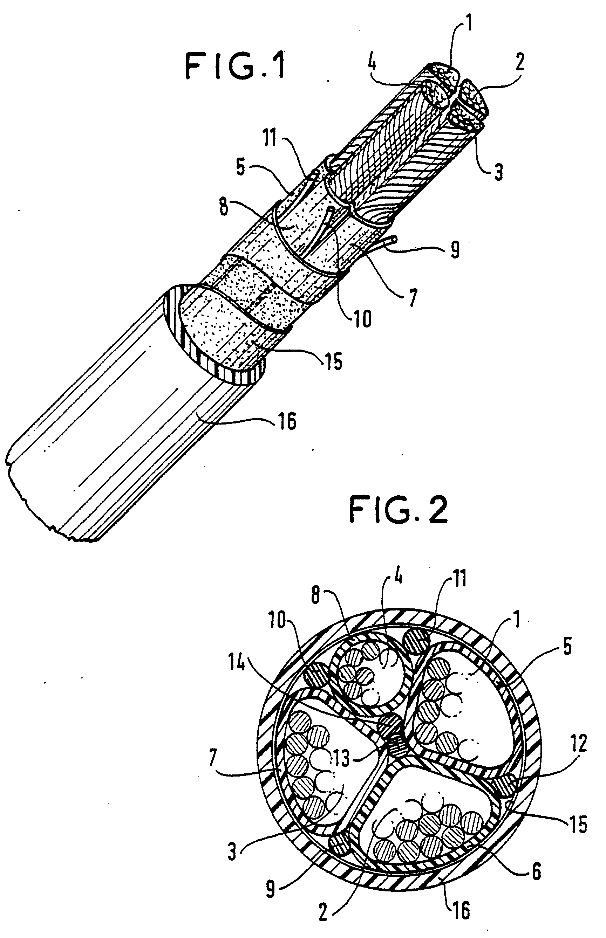

Une fois les joncs gonflants disposés entre les conducteurs, on dépose sur le pourtour des conducteurs une poudre gonflant à l'eau, par exemple de la carboxyméthylcellulose, représentée en figure 1 par des points sur leur surface, on enroule autour de l'ensemble un feuillard métallique formant armure 15, on dispose à nouveau sur ce feuillard une poudre gonflant à l'eau, puis on fait passer l'ensemble dans une extrudeuse de façon à l'entourer d'une gaine 16 de polymère thermoplastique, par exemple de polychlorure de vinyle.

**Revendications**

1. Câble électrique étanche d'énergie à basse tension polyphasé, caractérisé en ce qu'il comporte dans les interstices entre les conducteurs (1,2,3,4) des joncs (9,10,11,12,13,14) en un matériau présentant une capacité de gonflement en présence d'eau, caractérisé en ce que ses joncs comprennent des fibres gonflant en présence d'eau et des fils non gonflants en présence d'eau en une matière plastique de résistance à la traction plus élevée.

2. Câble selon la revendication 1, caractérisé en ce que ses joncs sont constitués par des fibres, fils, ou rubans retordus eux-mêmes, en polypropylène, et des fils ou fibres de polyacrylate.

3. Câble selon les revendications 1 ou 2 , présentant autour des conducteurs une armure métallique (15), elle-même entourée d'une gaine (16), caractérisé en ce qu'il comporte une poudre en matériau gonflant à l'eau, d'une part entre le contour extérieur des conducteurs et l'armure, d'autre part entre l'armure et la gaine.

# FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 947 082 (KABEL- UND METALLWERKE) * Revendications 1-11 * | 1-3 | H 01 B 7/28 |
| X | EP-A-0 261 000 (SUMITOMO) * Revendications 1-14 * | 1,2 | |
| X | THE TRANSACTIONS OF THE IECE OF JAPAN, vol. E-69, no. 2, February 1986, pages 89-91; S. KUKITA et al.: "Novel waterproof optical fiber cable with absorbent polymer yarn" | 1,2 | |
| A | EP-A-0 141 931 (AEG) * Revendications 1-13 * | 1 | |
| A | EP-A-0 013 477 (SOUTH AFRICAN INVENTIONS) * Revendications 1-10 * | 1 | |
| A | DE-A-3 640 910 (AEG) * Revendications 1-11 * | 1 | DOMAINES TECHNIQUES RECHERCHES (Int. Cl.5) |
| A | DE-A-2 755 568 (SIEMENS) * Revendications 1-4 * | 1,2 | H 01 B 7 |

Le présent rapport a été établi pour toutes les revendications

| Lieu de la recherche | Date d'achèvement de la recherche | Examinateur |
|---|---|---|
| LA HAYE | 25-09-1990 | DROUOT M.C. |